Europäisches Patentamt

European Patent Office

Office européen des brevets

(11) Publication number: **0 271 980**

**A1**

## (12) EUROPEAN PATENT APPLICATION

(21) Application number: 87309311.6

(22) Date of filing: 21.10.87

(51) Int. Cl.⁴: **G09F 15/00** , F16B 5/06

(30) Priority: 21.10.86 GB 8625217

(43) Date of publication of application:
22.06.88 Bulletin 88/25

(84) Designated Contracting States:
AT BE CH DE ES FR GB GR IT LI LU NL SE

(71) Applicant: **Heard-White, Henry Oscar**
**4, Holdom Avenue Saxon Park Industrial**
**Estate**
**Bletchley Milton Keynes, MK1 1QU(GB)**

(72) Inventor: **Heard-White, Henry Oscar**
**4, Holdom Avenue Saxon Park Industrial**
**Estate**
**Bletchley Milton Keynes, MK1 1QU(GB)**

(74) Representative: **Wain, Christopher Paul et al**
**A.A. THORNTON & CO. Northumberland**
**House 303-306 High Holborn**
**London WC1V 7LE(GB)**

(54) **Corner holder.**

(57) A corner holder may be used in mounting a board to a collapsible screen structure. It comprises a boss (1) mountable to said structure, and at least one arm (4) projecting radially therefrom and detachably mounted thereto at an inner end of the arm. The remote end of the arm (4) is provided with attachment means (6,7) for holding said board. In one embodiment the boss (1) comprises three axial layers (2,3,2), the outermost two (2) being identically shaped, the central one (3) being shaped similarly but with at least one rectangular area removed to accommodate an end of a respective arm (4). The three layers are connected and/or aligned by at least one pin (5) passing through the inner end of an arm.

*FIG. 1.*

# CORNER HOLDER

The present invention relates to a corner holder. More particularly, but not exclusively, it relates to a corner holder adapted for use with a collapsible display stand or screen. The invention has been developed for use with such a display screen, but many other uses can be envisaged.

The preferred type of display stand is one comprising a plurality of aluminium tubes each one joined at each end to other tubes by means of pivotable joint members. The screen folds to be extremely compact but when opened, provides a large surface area having a plurality of square sections, each having a joint member at each corner. It is known to display on these screens large photographs and the like, each made up of a plurality of square sections corresponding in dimensions to the section areas of the screen. Where the photographs or the like are printed on flexible material, this is quite possible. However, it has long been desired to mount the photographs etc. on a rigid material such as board so that they are more durable and give a more pleasing visual effect.

In the past, this has been accomplished by means of providing, at each joint of the screen a small clear plastics corner holder. This comprises a pair of concentric circles spaced one from the other in an axial direction by four clear plastics spacing members arranged in the form of a cross. Thus, four quarter circular areas are defined between the inner faces of the concentric circles. Each quarter circular space is intended to accommodate a corner of a board. It is comparatively easy to insert the first corner into the holder, generally by partially rotating the holder onto the corner. However, once one board is in position, the other three boards are difficult to place. In general the corners require bending into position and thus the boards become damaged. Board is used herein for the sake of convenience to cover any planar, substantially rigid sheet of material for attachment to a display screen as described. It may be rectangular or any other regular or irregular shape such as a triangle, diamond or a polygon.

One further disadvantage of the presently known corner holders is that the spacing members have finite thicknesses and thus the boards cannot be mounted contiguously, i.e. with their edge surfaces touching. They are always spaced by the thickness of the spacing member. In the case of a large picture built up from a number of boards, this can seriously detract from its effect.

It is an object of the present invention to provide a corner holder for the above and other uses which enables boards to be mounted contiguously and which operates easily in an unobtrusive manner.

The corner holders of the present invention can in fact be used to support boards at locations other than their corners, which may in some circumstances, prove useful.

According to the present invention there is provided a corner holder, preferably for use in mounting a board to a collapsible screen structure, comprising a boss mountable to said structure, at least one arm projecting radially therefrom, and detachably mounted thereto at an inner end of the arm, the remote end of said at least one arm being provided with attachment means for holding said board.

There are preferably either one, two, three or four arms. Preferably the boss is octagonal (in the case of three or four arms) or part octagonal (in the case of one or two arms).

In the cases where there are more than one arm, the arms may be arranged to project from the boss mutually at right angles.

The boss may comprise three axial layers, the outermost two being identically shaped, the central one being shaped similarly but with at least one rectangular area removed to accommodate an end of said at least one arm, the three layers being connected and/or aligned by at least one pin passing through the inner end of said at least one arm.

The attachment means may comprise a peg having an enlarged head for cooperation with a keyhole fixing aperture of the object to be held.

In an alternative embodiment, the or each arm is pivotally mounted to the boss and one outermost layer of the boss is rotatable, having generally L-shaped grooves to accommodate the or each arm when it is pivoted to a position extending in an axial direction. By this means, the or each arm may be locked in a folded disposition (extending axially) or in a usable disposition (extending radially). The grooved layer of the boss is rotatable to allow pivoting of the or each arm when one leg of the L-shaped groove aligns with the arm and to lock each arm when it is not aligned.

A friction plate may be provided between the grooved layer and the central layer.

Embodiments of the present invention will now be more particularly described by way of example and with reference to the accompanying drawings, in which:

FIGURE 1 is a plan view, partially cut away, of a holder embodying the invention and having four arms;

FIGURE 2 is a side elevation, partially in cross section, of the holder of Figure 1;

FIGURE 3 is a plan view of a holder having two arms;

FIGURE 4 is a plan view of a holder having a single arm; and

FIGURE 5 is a plan view of a second embodiment of holder.

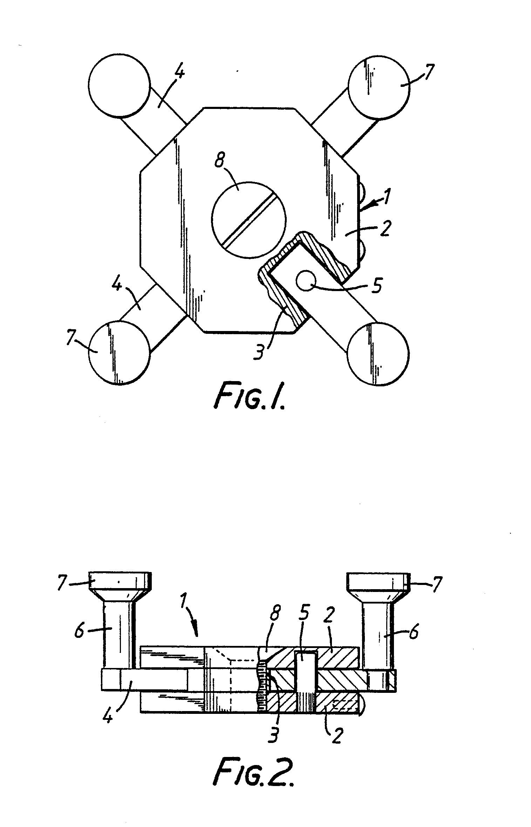

Referring now to the drawings, and more particularly to Figures 1-4, there is shown a holder comprising a central boss 1 which is shaped as an octagon or part octagon. As can be seen more clearly in Figure 2, the boss comprises three layers, the outermost ones 2 being octagonal (or part octagonal) while the central one 3 is provided with one or more cut-outs. In the case of the holder shown in Figure 1, there are four cut-outs spaced mutually at right angles around the periphery.

The holder has projecting from the boss one or more arms 4, of which the inner end or ends fit into the cut-outs in layer 8. Pins 5 pass through the arm and at least one of the outer layers 2 to hold the boss together. Each pin 5 preferably extends into a rebate cut into the inner surface of the other of the outermost layers 2.

On the end of each arm 4 remote from the boss 1 is provided an upstanding peg 6. Each peg 6 has an enlarged head portion 7 the peripheral surface of which is chamfered into the diameter of the peg. The arms may be all of the same length, or one or more may be longer than others. Since the boss is easily disassemblable, the arms may be interchanged for others of different lengths or type, or the number of arms may be changed.

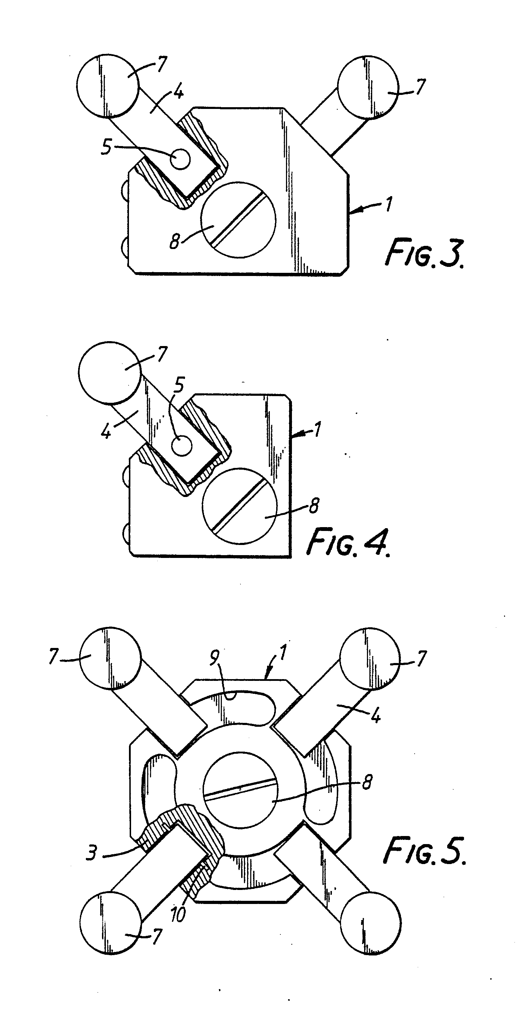

As can be seen from Figures 3 and 4, a reduced number of arms is possible and in some cases, essential. With the exception of the number of arms and the shape of the boss to correspond, all other details are identical.

A holder may be affixed to the display screen at a joint by means of screw 8 and is arranged with an arm projecting toward the centre of each square area of the screen. It may be rotated about fixing screw 8 if so desired. Clearly, at central joints, a four-arm holder is needed whereas a two-arm holder is required at the edge joints and a one-arm holder at each outside corner joint.

Boards to be attached to the screen are provided on their rear surfaces, at each of their four corners with a fixing plate having a keyholed shaped aperture. To affix the boards, they are placed with the large part of the keyhole aperture over the head of a peg in each corner and allowed to drop so that they are firmly, but detachably fixed. Once all the boards are in position, nothing can be seen of the corner holders and all the boards have contiguous edges. Thus a smooth uninterrupted picture can be built-up from a number of boards.

Other methods of attaching the boards may be used. For example the rear of the board may have one or more pegs or the like and the arms may be apertured. In the case of apertured arms, the rear of the board may alternatively have an aperture rather than a peg and separate fixing means are provided to link through the apertures.

When the display screen is folded, it is possible that the projecting arms may become entangled with those of an adjacent joint and for this reason, a second embodiment of the invention has been developed. This is shown in Figure 5. In essence, this second embodiment is the same as that shown in the earlier figures. The difference is that the pins 5 are omitted. The arms 4 are instead pivotable about a pair of stub axles 10 projecting from the arm and engaged in the central layer 3 of the boss. The arms are thus free to pivot from a radially extending position, as shown, through substantially a right angle in upward direction until they extend axially. They can be held in either position by rotation of the uppermost layer 2. As can be seen from Figure 5, this layer is provided with generally L-shaped apertures of which one leg is adapted to align with an arm, while the other leg curves at substantially a right angle thereto. When the arm is in the vertical position, rotation of the upper layer 2 in an anti-clockwise direction will cause the arm to be locked into the aperture 9. Similarly, when the arm is in a radially extending position, rotation of the upper layer 2 in either direction will cause misalignment of the other leg of the aperture 9 with the arm thereby locking it in position. In this embodiment, a friction plate is provided between the rotating upper layer 2 and the central layer 3, although for clarity, this friction plate is not shown in Figure 5.

The boss may be made of any suitable material, metal such as aluminium, or plastics such as nylon or polypropylene. The arms and pegs may also be of any suitable material, although, for purposes of strength, metal is preferred.

The invention has been described as being a corner holder for use with a collapsible display screen. It may, of course, find other uses.

## Claims

1. A corner holder, preferably for use in mounting a board to a collapsible screen structure, characterised in that it comprises a boss (1) mountable to said structure, at least one arm (4) projecting radially therefrom and detachably mounted thereto at an inner end of the arm (4), the remote end of said at least one arm (4) being provided with attachment means (6,7) for holding said board.

2. A corner holder as claimed in claim 1, characterised in that the boss (1) comprises three axial layers, the outermost two (2) being identically shaped, the central one (3) being shaped similarly but with at least one rectangular area removed to accommodate an end of said at least one arm (4), the three layers (2,3,2) being connected and/or aligned by at least one pin (5) passing through the inner end of said at least one arm.

3. A corner holder as claimed in either claim 1 or claim 2, characterised in that the boss (1) is octagonal and is provided with three or four arms (4), each arm extending normally from a radial face of said boss.

4. A corner holder as claimed in either claim 1 or claim 2, characterised in that the boss is part octagonal and is provided with one or two arms, the or each arm extending normally from a radial face of said boss.

5. A corner holder as claimed in any one of the preceding claims, characterised in that said at least one attachment means (6,7) comprises a peg (6) having an enlarged head (7) for cooperation with a keyhole fixing aperture of the board.

6. A corner holder as claimed in claim 1 , characterised in that said at least one arm (4) is mounted pivotably to said boss (1).

7. A corner holder as claimed in claim 6, characterised in that means (9) are provided for locking said at least one pivotally mounted arm in one of two positions.

FIG. 1.

FIG. 2.

FIG. 3.

FIG. 4.

FIG. 5.

European Patent Office

**EUROPEAN SEARCH REPORT**

Application Number

EP 87 30 9311

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 319 213 (BUCHMAYER) <br> * Page 6, lines 3-30; page 8, lines 18-26; figures 1-4 * | 1 | G 09 F 15/00 <br> F 16 B 5/06 |
| A | US-A-4 440 818 (BUCHAN) <br> * Column 3, lines 37-41,51-64; figures 2,3 * | 1 | |
| A | US-A-2 379 595 (ROE) <br> * Figures 2,3 * | 5 | |
| A | DE-A-2 226 629 (GLORY CARPEL) | | |

TECHNICAL FIELDS SEARCHED (Int. Cl.4)

G 09 F
F 16 B
A 47 F
A 47 G
E 04 H
E 04 B
E 04 F

The present search report has been drawn up for all claims

| Place of search | Date of completion of the search | Examiner |
|---|---|---|
| THE HAGUE | 28-01-1988 | SCHMITTER BERNARD |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                        

& : member of the same patent family, corresponding document

EPO FORM 1503 03.82 (P0401)